# EUROPÄISCHE PATENTSCHRIFT

(11) **EP 3 866 997 B1**
(45) Veröffentlichungstag und Bekanntmachung des Hinweises auf die Patenterteilung: **18.11.2026**
(21) Anmeldenummer: 20704397.7
(22) Anmeldetag: 22.01.2020
(51) Int. Cl.: B22F 5/04, B22D 39/02, B22F 7/08, B33Y 80/00, B33Y 10/00, B22F 10/00

(54) **HERSTELLUNGSVERFAHREN FÜR EIN BAUTEIL MIT INTEGRIERTEN KANÄLEN UND BAUTEIL**
PRODUCTION METHOD FOR A COMPONENT HAVING INTEGRATED CHANNELS AND COMPONENT
PROCÉDÉ DE FABRICATION POUR UNE PIÈCE PRÉSENTANT DES CANAUX INTÉGRÉS ET PIÈCE

(30) Priorität: 29.01.2019 DE 102019201085
(43) Veröffentlichungstag der Anmeldung: 25.08.2021
(73) Patentinhaber: Siemens Energy Global GmbH & Co. KG, 81739 München (DE)
(72) Erfinder: FENSKE, Sören, 10625 Berlin (DE); MATTHEIS, Thorsten, 45473 Mülheim (DE); SCHÄFER, Martin, 10557 Berlin (DE)
(86) Internationale Anmeldenummer: PCT/EP2020/051475
(87) Internationale Veröffentlichungsnummer: WO 2020/156898

(56) Entgegenhaltungen:
- WO-A1-2004/004955
- DE-A1- 102014 012 480

## Beschreibung

Die Erfindung betrifft ein Herstellungsverfahren für ein Bauteil mit integrierten Kanälen für eine interne Fluidführung, umfassend einen ersten Bereich, der mit einem zweiten Bereich verbunden ist und wobei die Kanäle sowohl durch den ersten Bereich als auch durch den zweiten Bereich verlaufen. Die Erfindung betrifft weiterhin ein Bauteil mit integrierten Kanälen für eine interne Fluidführung, umfassend einen ersten Bereich, der mit einem zweiten Bereich verbunden ist und wobei die Kanäle sowohl durch den ersten Bereich als auch durch den zweiten Bereich verlaufen.

Anlässlich neuartiger Verfahrenseigenschaften gewähren additive Fertigungsverfahren wirtschaftliche und technische Vorteile gegenüber konventionellen, etablierten Fertigungstechniken. Dies qualifiziert sie als Schlüsseltechnologie für zukünftige industrielle Produktionssysteme. Trotz vorhandener Potenziale, wie der enormen Geometriefreiheit, unterliegen sie einer geringen Produktivität und einem unzureichenden Produktnutzen. Zurzeit gibt es nur begrenzte Möglichkeiten, die additiven Fertigungsfahren mit etablierten Fertigungstechniken zu kombinieren.

Bisher wurden die konventionellen und die additiven Fertigungsverfahren ohne besondere Anpassung zusammengeführt d.h. die charakteristischen Verfahrensmerkmale wurden bis dato nicht berücksichtigt. Dies ist z.B. in der DE 10 2014 012 480 B2 und der WO2004004955A1 der Fall. Darin ist ein Herstellungsverfahren eines Laufrads einer Strömungsmaschine beschrieben, wobei das Laufrad einen Schaufelträger sowie zumindest eine Schaufel aufweist. Das Herstellungsverfahren wird unter Verwendung einer generativen Fertigungsvorrichtung ausgeführt. Als erstes wird der Schaufelträger bereitgestellt und in einen Fertigungsraum der generativen Fertigungsvorrichtung eingelegt. In die generative Fertigungsvorrichtung wird ein 3D-Volumen-Datensatz geladen, der die zumindest eine Schaufel beschreibt. Es wird ein Ausgangsmaterial für die Schaufel bereitgestellt und mit Hilfe der generativen Fertigungsvorrichtung vom Schaufelträger ausgehend, wird schichtweise ein Materialzusammenhalt des Ausgangsmaterial hergestellt. Dabei wird eine erste Schicht mit dem Schaufelträger stoffschlüssig verbunden.

Ausgehend von diesem Stand der Technik liegt der Erfindung die Aufgabe zugrunde, unter der Anwendung von einem konventionellen Fertigungsverfahren und einem generativen Fertigungsverfahren ein Bauteil mit integrierten Kanälen herzustellen, dessen Geometrie optimal an die technologischen Besonderheiten beider Fertigungsverfahren angepasst ist.

Die Aufgabe wird erfindungsgemäß gelöst durch ein Herstellungsverfahren für ein Bauteil mit integrierten Kanälen für eine interne Fluidführung, umfassend einen ersten Bereich, der mit einem zweiten Bereich verbunden ist und wobei die Kanäle sowohl durch den ersten Bereich als auch durch den zweiten Bereich verlaufen, wobei:
- der erste Bereich mittels eines Verfahrens zum Gießen mit verlorenen Modellen hinterschneidungsfrei hergestellt wird,
- ausgehend vom ersten Bereich der zweite Bereich unter Verwendung eines generativen Fertigungsverfahrens aufgebaut wird, und
- in den ersten Bereich zumindest eine zum zweiten Bereich hin offene Vertiefung ausgebildet wird, welche den Umlenkungsbereich eines durch den zweiten Bereich verlaufenden Kanals mit Strömungsrichtungsänderung bildet.

Die Aufgabe wird weiterhin erfindungsgemäß gelöst durch ein Bauteil mit integrierten Kanälen für eine interne Fluidführung, umfassend einen ersten Bereich, der mit einem zweiten Bereich verbunden ist und wobei die Kanäle sowohl durch den ersten Bereich als auch durch den zweiten Bereich verlaufen, wobei der erste Bereich ein Gussteil ist, welches mittels eines Verfahrens zum Gießen mit verlorenen Modellen hergestellt ist und der erste Bereich frei von Hinterschneidungen ist, und wobei der zweite Bereich unter Verwendung eines generativen Fertigungsverfahrens ausgehend vom ersten Bereich aufgetragen ist, und der erste Bereich zumindest eine zum zweiten Bereich hin offene Vertiefung aufweist, welche den Umlenkungsbereich eines durch den zweiten Bereich verlaufenden Kanals mit Strömungsrichtungsänderung bildet.

Die in Bezug auf das Herstellungsverfahren nachstehend angeführten Vorteile und bevorzugten Ausgestaltungen lassen sich sinngemäß auf das Bauteil übertragen.

Unter "additivem Fertigungsverfahren" wird ein Verfahren verstanden, bei dem auf der Basis von digitalen 3D-Konstruktionsdaten durch das Ablagern von Material schichtweise ein Bauteil aufgebaut wird. Additive Fertigungsverfahren, die hierzu eingesetzt werden können, sind z.B. Pulverbettbasierte Verfahren (engl. Powder Bed Fusion, z.B. selektives Laserschmelzen, selektives Lasersintern und Elektronenstrahlschmelzen), Direct Energy Deposition (DED, z.B. Laserauftragschweißen), Binder Jetting oder Sheet Lamination.

Für die Herstellung von Gießformen werden Modelle genutzt. Es wird unterschieden, ob die Modelle einmalig (verlorenes Modell) oder mehrfach (Dauermodell) genutzt werden können. Mit "Verfahren zum Gießen mit verlorenen Modellen" wird hierbei ein Gießverfahren bezeichnet, bei dem das Modell nur einmalig eingesetzt werden kann und danach zerstört wird. Solche Gießverfahren sind z.B. Feingießen, Vollformgießen oder Lost Foam.

Die Erfindung basiert auf der Überlegung, die komplexen Kanalstrukturen in den zweiten Bereich, der mittels des additiven Fertigungsfahrens hergestellt wird, komplett zu verlegen. Auf diese Weise kann der erste Bereich, der gegossen wird, eine derart vereinfachte Geometrie aufweisen, dass das Gussteil (sowie das zum Gießen einmalig verwendete Modell) frei von Hinterschneidungen ist. Dies gestattet eine wesentliche Vereinfachung des Herstellungsprozesses für den ersten Bereich. Dabei erfolgt die Herstellung des ersten Bereichs frei von keramischen Kernen, die nötig sind, um Gussteile mit Hohlräumen fertigen zu können und nach dem Erstarren entnommen oder zerstört werden.

Dadurch, dass das additive Fertigungsfahren eine größere Flexibilität bei der Gestaltung und Formgebung der damit hergestellten Bauteile bietet, wird diese Flexibilität optimal genutzt, um den zweiten Bereich, der komplexere Kanalgeometrien aufweist, auf den ersten Bereich zu drucken. Beide Bereiche sind dabei stoffschlüssig miteinander verbunden, indem ausgehend von einer Oberfläche des ersten Bereichs, der zweite Bereich schichtweise aufgebaut wird. Dabei wird die durch den ersten Bereich definierte Geometrie stetig fortgesetzt, um das Bauteil zu vervollständigen.

Durch die offene Vertiefung wird die Ausgestaltung eines Kanals mit Strömungsrichtungsänderung, der sich zumindest teilweise im ersten Bereich befindet, ohne den Einsatz von keramischen Kernen zur Erzeugung von Hinterschneidungen ermöglicht. Der Kanal erstreckt sich im Wesentlichen durch den zweiten Bereich, jedoch findet die Strömungsrichtungsänderung zumindest teilweise im ersten Bereich statt. Die Vertiefung stellt eine Mulde an der Oberfläche des ersten Bereichs dar, deren Größe an die Größe und Verlauf des Kanals im zweiten Bereich angepasst ist. Eine Trennwand, welche die Umlenkung des Fluids realisiert, erstreckt sich dabei insbesondere lediglich im gedruckten, zweiten Bereich.

Gemäß einer bevorzugten Ausgestaltung wird im zweiten Bereich eine größere Anzahl von Kanälen ausgebildet als im ersten Bereich. Aus Gründen der Geometrievereinfachung werden im ersten Bereich kleine Kanäle zusammengefasst, um wenige größere Kanäle zu bilden. Dennoch sind insbesondere alle Kanäle im ersten Bereich mit einem oder mehreren Kanälen im Blatt fluidtechnisch verbunden.

Bevorzugt wird der erste Bereich mittels Feingießens hergestellt. Unter Feinguss versteht man die Herstellung von Gussteilen nach dem Wachsausschmelzverfahren. Die Gussstücke zeichnen sich durch Detailstärke, Maßgenauigkeit und Oberflächenqualität aus. Das Modell wird dabei aus speziell geeigneten Wachsen oder ähnlichen Thermoplasten oder deren Gemischen zum Beispiel im Spritzgussverfahren hergestellt. Die Modelle werden zunächst in Einfach- oder Mehrfachwerkzeugen gespritzt. Diese Werkzeuge bestehen in der Regel aus Aluminium oder Stahl. Je nach Gesamtstückzahl, Gestalt des Gussstückes und Art des Modellwerkstoffes wird das entsprechende Spritzwerkzeug gebaut. Um Hinterschneidungen in der Kontur mit einzubringen, werden bei Feingießen in der Regel vorgeformte wasserlösliche oder keramische Kerne erforderlich eingesetzt, für welche dann ein Zusatzwerkzeug benötigt wird. Bei dem erfindungsgemäßen Herstellungsverfahren entfällt nämlich der Einsatz von solchen keramischen Kernen und Zusatzwerkzeugen.

Vorzugsweise wird der erste Bereich serienmäßig hergestellt. Unter serienmäßig wird insbesondere verstanden, dass für die Fertigung von mehreren Bauteilen des gleichen Typs mehrere identische Gussteile verwendet werden, die stets den ersten Bereich bildet.

Vorteilhafterweise wird der zweite Bereich individuell hergestellt, d.h. auf einem konkreten Gussteil wird individuell ein zweiter Bereich aufgedruckt. Insbesondere können dabei mehrere Bauteile hergestellt werden, die den gleichen ersten Bereich aufweisen, sich untereinander jedoch hinsichtlich der Geometrie des zweiten Bereichs unterscheiden, z.B. indem die Kanäle unterschiedlich ausgestaltet sind.

Gemäß einer weiteren bevorzugten Ausführungsvariante wird der erste Bereich als Schaufelfuß einer Turbinenschaufel ausgebildet und der zweite Bereich wird als Schaufelblatt einer Turbinenschaufel ausgebildet. Die Turbinenschaufel kann sowohl eine Laufschaufel als auch eine Leitschaufel sein. Alternativ zur Turbinenschaufel kann das Bauteil Bestandteil eines Brenners oder einer Düse sein.

Vorteilhafterweise wird der zweite Bereich derart ausgebildet, dass er einen Teil des Schaufelfußes umfasst. Dies bedeutet, dass der erste Bereich und der zweite Bereich nicht mit den beiden funktionellen Komponenten Schaufelfuß und Schaufelblatt einer Turbinenschaufel identisch sind, sondern der zweite Bereich umfasst über dem Schaufelblatt hinaus auch einen angrenzenden Teil des Schaufelfußes. Lediglich dadurch, dass der aufgedruckte zweite Bereich sich über das Schaufelblatt hinaus in den Schaufelfuß erstreckt, werden Hinterschneidungen und die dafür benötigten keramischen Kerne umgangen.

Ein Ausführungsbeispiel der Erfindung wird anhand einer Zeichnung näher erläutert. Hierin zeigen:
- FIG 1: in perspektivischer Ansicht eine Turbinenschaufel mit einem Schaufelfuß und einem Schaufelblatt,
- FIG 2: einen Teillängsschnitt durch eine Turbinenschaufel gemäß einer ersten Ausführung, und
- FIG 3: in perspektivischer Ansicht den Schaufelfuß einer Turbinenschaufel gemäß einer zweiten Ausführung.

Gleiche Bezugszeichen haben in den verschiedenen Figuren die gleiche Bedeutung.

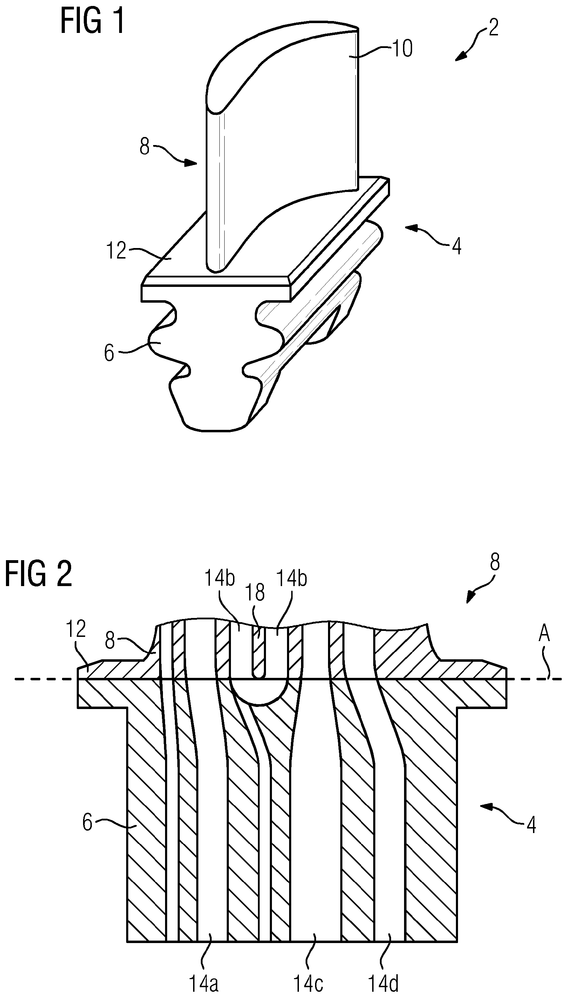

Aus FIG 1 geht eine Turbinenschaufel 2 hervor, hier eine Leitschaufel, die zweiteilig aufgebaut ist.

Ein erster Bereich 4 der Turbinenschaufel 2 ist als ein Gussteil aufgebaut und umfasst im Wesentlichen einen Schaufelfuß 6 der Turbinenschaufel 2. Dieser erste Bereich 4 wird serienmäßig mittels eines Verfahrens zum Gießen mit verlorenen Modellen hergestellt, insbesondere mit Hilfe von Feingießen. Beim Feingießen wird für jedes Gussteil ein Wachsmodell in Form des herzustellenden Werkstückes angefertigt. Die Herstellung des Gussteils 4 wurde dabei wesentlich vereinfacht, indem der Schaufelfuß 6 keine Hinterschneidungen aufweist. Somit werden bei der Herstellung des Schaufelfußes 6 keine keramischen Kerne eingesetzt.

Ein zweiter Bereich 8 der Turbinenschaufel 2 ist hergestellt mittels eines generativen Fertigungsverfahrens und umfasst ein Schaufelblatt 10 und einen kleinen Teil 12 des Schaufelfußes 6, der an das Schaufelblatt 10 angrenzt. Eine erste Schicht des Teils 12 des Schaufelfußes 6 wird stoffschlüssig mit dem Gussteil verbunden und der Rest des zweiten Bereichs 8 wird schichtweise darauf aufgebaut. Dabei liegt eine besonders große Flexibilität bei der Ausgestaltung des zweiten Bereichs 8 vor, welche ausgenutzt werden kann, um auf dem serienmäßigen Gussteil 6 individuell ein Schaufelblatt 10 zu drucken.

Die Grenze zwischen dem ersten Bereich 4 und dem zweiten Bereich 8 ist in FIG 2 durch eine gestrichelte Linie A gezeigt. Die Turbinenschaufel 2 ist intern gekühlt und zu Zwecken der Kühlung sind in der Turbinenschaufel 2 mehrere Kanäle oder Kühlkanäle 14a, 14b, 14c, 14d ausgebildet.

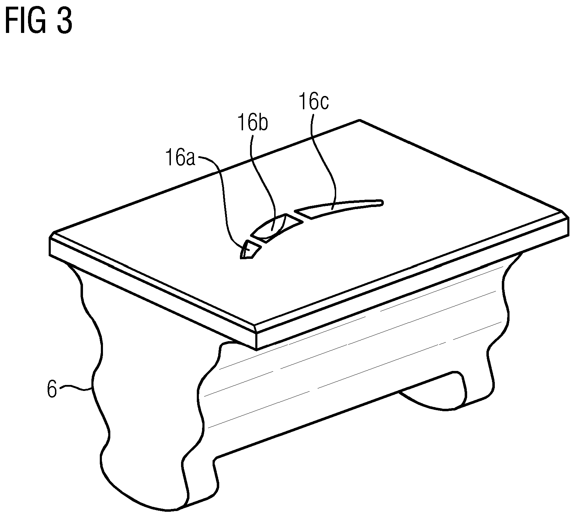

Wie aus FIG 3 ersichtlich, weist die Oberfläche des Schaufelfußes 6 Aussparungen 16a, 16b, 16c auf, wobei 16a und 16c die Öffnungen von Kanälen 14a, 14c bilden, die sich sowohl durch den ersten Bereich 4 als auch durch den zweiten Bereich 8 erstrecken. Zwischen den Kanälen 14a, 14c ist auf der Oberfläche des Schaufelfußes 6 eine Vertiefung 16b ausgebildet, welche den Umlenkungsbereich des durch den zweiten Bereich verlaufenden Kanals 14b mit Strömungsrichtungsänderung bildet. Eine Trennwand 18 des Kanals 14b, die die Strömungsrichtungsänderung ermöglicht, verläuft lediglich durch den zweiten Bereich 8, wie in FIG 2 gezeigt.

Der Schaufelfuß 6 gemäß FIG 3 unterscheidet sich von dem gemäß FIG 2 dadurch, dass der Kanal 14c im ersten Bereich 4 einen relativ großen Querschnitt aufweist und im zweiten Bereich an den Kanal 14c mehrere Kanäle (hier nicht gezeigt) angeschlossen sind, die jeweils einen kleinen Querschnitt aufweisen. Dabei verteilt sich das im Betrieb der Turbinenschaufel 2 strömende Kühlfluid ausgehend vom Kanal 14c in die kleineren Kanäle im Schaufelblatt 10. Im Vergleich zur FIG 2 sind die Kanäle 14c und 14d im ersten Bereich 4 zu einem einzigen Kanal 14c zusammengefasst, im zweiten Bereich 8 jedoch verlaufen sie als getrennte Kanäle.

## Patentansprüche

1. Herstellungsverfahren für ein Bauteil mit integrierten Kanälen (14a, 14b, 14c, 14d) für eine interne Fluidführung, umfassend einen ersten Bereich (4), der mit einem zweiten Bereich (8) verbunden ist und wobei die Kanäle (14a, 14b, 14c, 14d) sowohl durch den ersten Bereich (4) als auch durch den zweiten Bereich (8) verlaufen, wobei:
- der erste Bereich (4) mittels eines Verfahrens zum Gießen mit verlorenen Modellen hinterschneidungsfrei hergestellt wird, und
- ausgehend vom ersten Bereich (4), der zweite Bereich (8) unter Verwendung eines generativen Fertigungsverfahrens aufgebaut wird, und
- in den ersten Bereich (4) zumindest eine zum zweiten Bereich (8) hin offene Vertiefung (16b) ausgebildet wird, welche den Umlenkungsbereich eines durch den zweiten Bereich verlaufenden Kanals (14b) mit Strömungsrichtungsänderung bildet.

2. Herstellungsverfahren nach Anspruch 1,
wobei im zweiten Bereich (8) eine größere Anzahl von Kanälen (14a, 14b, 14c, 14d) ausgebildet wird als im ersten Bereich (4).

3. Herstellungsverfahren nach Anspruch 1 oder 2,
wobei der erste Bereich (4) mittels Feingießens hergestellt wird.

4. Herstellungsverfahren nach einem der vorhergehenden Ansprüche,
wobei der erste Bereich (4) serienmäßig hergestellt wird.

5. Herstellungsverfahren nach einem der vorhergehenden Ansprüche,
wobei der zweite Bereich (8) individuell hergestellt wird.

6. Herstellungsverfahren nach einem der vorhergehenden Ansprüche,
wobei der erste Bereich (4) als Schaufelfuß (6) einer Turbinenschaufel (2) ausgebildet wird und der zweite Bereich (8) als ein Schaufelblatt (10) einer Turbinenschaufel (2) ausgebildet wird.

7. Herstellungsverfahren nach Anspruch 6,
wobei der zweite Bereich (8) derart ausgebildet wird, dass er einen Teil (12) des Schaufelfußes (6) umfasst.

8. Bauteil mit integrierten Kanälen (14a, 14b, 14c, 14d) für eine interne Fluidführung, umfassend einen ersten Bereich (4), der mit einem zweiten Bereich (8)verbunden ist und wobei die Kanäle (14a, 14b, 14c, 14d) sowohl durch den ersten Bereich (4) als auch durch den zweiten Bereich (8) verlaufen, wobei der erste Bereich (4) ein Gussteil ist, welches mittels eines Verfahrens zum Gießen mit verlorenen Modellen hergestellt ist und der erste Bereich (4) frei von Hinterschneidungen ist, wobei der zweite Bereich (8) unter Verwendung eines generativen Fertigungsverfahrens ausgehend vom ersten Bereich (4) aufgetragen ist, und wobei der erste Bereich (4) zumindest eine zum zweiten Bereich (8) hin offene Vertiefung (16b) aufweist, welche den Umlenkungsbereich eines durch den zweiten Bereich (8) verlaufenden Kanals (14b) mit Strömungsrichtungsänderung bildet.

9. Bauteil nach Anspruch 8,
wobei die Anzahl der Kanäle (14a, 14b, 14c, 14d) im zweiten Bereich (8) größer ist als die Anzahl der Kanäle (14a, 14b, 14c) im ersten Bereich.

10. Bauteil nach Anspruch 8 oder 9,
wobei der erste Bereich (4) mittels Feingießens hergestellt ist.

11. Bauteil nach einem der Ansprüche 8 bis 10,
wobei der erste Bereich (4) ein serienmäßiges Gussteil (4) ist.

12. Bauteil nach einem der Ansprüche 8 bis 11,
wobei der zweite Bereich (8) ein individuell hergestellter Teil ist.

13. Bauteil nach einem der Ansprüche 8 bis 12,
wobei der erste Bereich (4) ein Schaufelfuß (6) einer Turbinenschaufel (2) ist und der zweite Bereich (8) ein Schaufelblatt (10) der Turbinenschaufel (2) umfasst.

14. Bauteil nach Anspruch 13,
wobei der zweite Bereich (8) einen Teil (12) des Schaufelfußes (6) umfasst.

## Claims

1. A production method for a component having integrated channels (14a, 14b, 14c, 14d) for internal fluid guidance, comprising a first region (4) connected to a second region (8), and wherein the channels (14a, 14b, 14c, 14d) extend through both the first region (4) and the second region (8), wherein:
- the first region (4) is produced without undercuts by means of a method for casting with lost models, and
- starting from the first region (4), the second region (8) is constructed using a generative manufacturing method, and
- at least one recess (16b) open toward the second region (8) is formed into the first region (4) and forms the deflecting region of a channel (14b) extending through the second region with a change in flow direction.

2. The production method according to claim 1,
wherein a larger number of channels (14a, 14b, 14c, 14d) is formed in the second region (8) than in the first region (4).

3. The production method according to claim 1 or 2,
wherein the first region (4) is produced by means of precision casting.

4. The production method according to any one of the preceding claims,
wherein the first region (4) is mass-produced.

5. The production method according to any one of the preceding claims,
wherein the second region (8) is produced individually.

6. The production method according to any one of the preceding claims,
wherein the first region (4) is formed as a blade/vane root (6) of a turbine blade/vane (2), and the second region (8) is formed as a blade/vane leaf (10) of a turbine blade/vane (2).

7. The production method according to claim 6,
wherein the second region (8) is formed to comprise a part (12) of the blade/vane root (6).

8. A component having integrated channels (14a, 14b, 14c, 14d) for internal fluid guidance, comprising a first region (4) connected to a second region (8), and wherein the channels (14a, 14b, 14c, 14d) extend through both the first region (4) and the second region (8), wherein the first region (4) is a cast part produced by means of a method for casting with lost models, and the first region (4) is free of undercuts, wherein the second region (8) is deposited starting from the first region (4) using a generative manufacturing method, and wherein the first region (4) has at least one recess (16b) open toward the second region (8) and forming the deflection region of a channel (14b) extending through the second region (8) with a change in flow direction.

9. The component according to claim 8,
wherein the number of channels (14a, 14b, 14c, 14d) in the second region (8) is greater than the number of channels (14a, 14b, 14c) in the first region.

10. The component according to claim 8 or 9,
wherein the first region (4) is produced by means of precision casting.

11. The component according to any one of claims 8 to 10, wherein the first region (4) is a standard cast part (4).

12. The component according to any one of claims 8 to 11, wherein the second region (8) is an individually produced part.

13. The component according to any one of claims 8 to 12, wherein the first region (4) is a blade/vane root (6) of a turbine blade/vane (2), and the second region (8) comprises a blade/vane leaf (10) of the turbine blade/vane (2).

14. The component according to claim 13,
wherein the second region (8) comprises a part (12) of the blade/vane root (6).

## Revendications

1. Procédé de fabrication d'une pièce présentant des canaux intégrés (14a, 14b, 14c, 14d) pour une circulation interne de fluide, comprenant une première partie (4) reliée à une seconde partie (8), et dans lequel les canaux (14a, 14b, 14c, 14d) s'étendent à la fois à travers la première partie (4) et à travers la seconde partie (8), dans lequel :
- la première partie (4) est fabriquée sans contre-dépouilles au moyen d'un procédé de coulée à modèle perdu, et
- la seconde partie (8) est construite à partir de la première partie (4) au moyen d'un procédé de fabrication additive, et
- au moins un évidement (16b) ouvert en direction de la seconde partie (8) est formé dans la première partie (4), lequel évidement constitue la zone de déviation d'un canal (14b) s'étendant à travers la seconde partie, avec un changement de direction d'écoulement.

2. Procédé de fabrication selon la revendication 1,
dans lequel un nombre de canaux (14a, 14b, 14c, 14d) plus important est formé dans la seconde partie (8) que dans la première partie (4).

3. Procédé de fabrication selon la revendication 1 ou 2, dans lequel la première partie (4) est fabriquée au moyen d'un moulage de précision.

4. Procédé de fabrication selon l'une quelconque des revendications précédentes,
dans lequel la première partie (4) est fabriquée en série.

5. Procédé de fabrication selon l'une quelconque des revendications précédentes,
dans lequel la seconde partie (8) est fabriquée sur mesure.

6. Procédé de fabrication selon l'une quelconque des revendications précédentes,
dans lequel la première partie (4) est conçue sous la forme d'un pied d'aube (6) d'une aube de turbine (2) et la seconde partie (8) est conçue sous la forme d'une pale (10) d'une aube de turbine (2).

7. Procédé de fabrication selon la revendication 6,
dans lequel la seconde partie (8) est conçue de sorte qu'elle comprenne une portion (12) du pied d'aube (6).

8. Pièce présentant des canaux intégrés (14a, 14b, 14c, 14d) pour une circulation interne de fluide, comprenant une première partie (4) reliée à une seconde partie (8), et dans laquelle les canaux (14a, 14b, 14c, 14d) s'étendent à la fois à travers la première partie (4) et à travers la seconde partie (8), dans laquelle la première partie (4) est une pièce coulée fabriquée au moyen d'un procédé de coulée à modèle perdu, la première partie (4) étant exempte de contre-dépouilles, dans laquelle la seconde partie (8) est édifiée par dépôt à partir de la première partie (4) au moyen d'un procédé de fabrication additive, et dans laquelle la première partie (4) présente au moins un évidement (16b) ouvert en direction de la seconde partie (8), lequel évidement constitue la zone de déviation d'un canal (14b) s'étendant à travers la seconde partie (8) avec un changement de direction d'écoulement.

9. Pièce selon la revendication 8,
dans laquelle le nombre de canaux (14a, 14b, 14c, 14d) dans la seconde partie (8) est supérieur au nombre de canaux (14a, 14b, 14c) dans la première partie.

10. Pièce selon la revendication 8 ou 9,
dans laquelle la première partie (4) est fabriquée au moyen d'un moulage de précision.

11. Pièce selon l'une quelconque des revendications 8 à 10, dans laquelle la première partie (4) est une pièce coulée (4) de série.

12. Pièce selon l'une quelconque des revendications 8 à 11, dans laquelle la seconde partie (8) est une pièce fabriquée sur mesure.

13. Pièce selon l'une quelconque des revendications 8 à 12, dans laquelle la première partie (4) est un pied d'aube (6) d'une aube de turbine (2) et la seconde partie (8) comprend une pale (10) de l'aube de turbine (2).

14. Pièce selon la revendication 13,
dans laquelle la seconde partie (8) comprend une portion (12) du pied d'aube (6).
